Europäisches Patentamt

European Patent Office

Office européen des brevets

(11) Veröffentlichungsnummer: **0 371 152 B1**

(12) **EUROPÄISCHE PATENTSCHRIFT**

(45) Veröffentlichungstag der Patentschrift: **10.02.93**

(21) Anmeldenummer: **88119730.5**

(22) Anmeldetag: **26.11.88**

(51) Int. Cl.⁵: **B01J 37/34**, B01J 37/02, C07C 5/32

54 **Metalloxidpulver, deren Gemische, Metallmischoxidpulver, deren Gemische und deren Verwendung bei der katalytischen Dehydrierung von Kohlenwasserstoffen.**

(43) Veröffentlichungstag der Anmeldung:
06.06.90 Patentblatt 90/23

(45) Bekanntmachung des Hinweises auf die Patenterteilung:
10.02.93 Patentblatt 93/06

84 Benannte Vertragsstaaten:
ES GR

56 Entgegenhaltungen:
EP-A- 0 128 302
EP-A- 0 202 911
DE-A- 2 633 959
US-A- 2 500 482

73 Patentinhaber: **VEBA OEL AG**
**Alexander-von-Humboldt-Strasse**
**W-4650 Gelsenkirchen-Hassel(DE)**

72 Erfinder: **Schramm, Bernhard, Dr.**
**Langgewann 33**
**W-6900 Heidelberg(DE)**
Erfinder: **Kern, Jürgen**
**Teichweg 10**
**W-6919 Bammental(DE)**

Erfinder: **Schwahn, Harald**
**Schlossstrasse 68**
**W-6908 Wiesloch(DE)**
Erfinder: **Preuss, August-Wilhelm, Dr.**
**Riedweg 22**
**W-4270 Dorsten(DE)**
Erfinder: **Gottlieb, Klaus, Dr.**
**Alte Strasse 59**
**W-5804 Herdecke(DE)**
Erfinder: **Bruderreck, Hartmut, Dr.**
**Bärenkampstrasse 55**
**W-4650 Gelsenkichen(DE)**

74 Vertreter: **Lindner, Wolfgang, Dr.**
**Alexander-von-Humboldt-Strasse Postfach 20 10 45**
**W-4650 Gelsenkirchen(DE)**

EP 0 371 152 B1

**Beschreibung**

Die Erfindung betrifft Metalloxidpulver, deren Mischungen, Metallmischoxidpulver, deren Gemische und deren Verwendung bei der katalytischen Dehydrierung verzweigter oder unverzweigter gesättigter und ungesättigter Kohlenwasserstoffe mit 2 bis 6 Kohlenstoffatomen oder deren Gemischen bei einer Temperatur von 300 bis 700°C und einem Druck von 0,1 bis 20 bar, ggf. in Gegenwart von Wasserstoff, Wasserdampf, Sauerstoff oder von Gemischen derselben.

Die katalytische Dehydrierung von Kohlenwasserstoffen, insbesondere von kurzkettigen Kohlenwasserstoffen mit 2 bis 6 Kohlenstoffatomen, erfolgt in bekannter Weise dadurch, daß die Kohlenwasserstoffe rein oder mit Inertgas verdünnt adiabatisch durch Festbettreaktoren, die zu mehreren parallel geschaltet sein können, geleitet werden. Die Dehydrierungskatalysatoren bestehen im allgemeinen aus Aluminiumoxid und Zusätzen wie z. B. Chromoxid oder anderen Metalloxiden oder auch deren Mischungen (vgl. DE-OS 36 14 854, DE-OS 36 20 481, US-PS 2,943,067 und US-PS 2,419,997).

Die Herstellung solcher Metalloxide erfolgt üblicherweise durch Eindampfen der Metallnitratlösungen oder durch Fällung derselben, z. B. mit wäßriger Ammoniaklösung. Häufig werden geeignete Lösungen der Metallsalze auf Trägermaterialien wie Aluminiumoxid aufgebracht.

Seit etwa 8 Jahren beschäftigen sich verschiedene Arbeitsgruppen mit der Untersuchung von keramischen Pulvern, die mit einer neuartigen Methode hergestellt werden: Geeignete gasförmige Ausgangsverbindungen reagieren unter $CO_2$-Laser-Bestrahlung zu Feststoffen in Pulverform ab.

Die gebildeten Pulver haben folgende Eigenschaften: Kleiner Partikeldurchmesser, gleichmäßige Form, enge Verteilung der Partikelgrößen, hoher Reinheitsgrad, geringer Agglomerationsgrad und hohe Oberflächenaktivität (vgl. Journal of the American Ceramic Society, Vol. 65, No. 7, 324 ff.).

In US-PS 4,343,687 ist unter anderem die Herstellung von Metalloxidpulvern durch Bestrahlung geeigneter Ausgangsverbindungen mit einem gepulsten IR-Laser einer von dem Reaktionsgemisch nicht absorbierten Frequenz beschrieben. Die so erhaltenen Produkte sollen für katalytische Zwecke geeignet sein. Nach diesem Verfahren wird in einer abgeschlossenen, statischen Zelle beispielsweise ein $Cr_2O_3$-Pulver auf einem Träger durch eine laserinduzierte Reaktion zwischen Chromylchlorid ($CrO_2Cl_2$) als Oxidationsmittel und Wasserstoff als Reaktionspartner unter vermindertem Druck auf dem Wege einer kettenreaktion, ausgelöst durch mindestens einen Laserimpuls von 2 Joule/cm$^2$, hergestellt.

Eine Aufgabe der vorliegenden Erfindung besteht nun darin, neue Metalloxidpulver aus Chrom(III)-oxid, Titan(IV)-oxid, Vanadin(V)-oxid oder deren Gemische und neue Metallmischoxide aus Chrom(III)-oxid und Titan(IV)-oxid, Chrom(III)-oxid und Vanadin(V)-oxid oder Titan(IV)-oxid und Vanadin(V)-oxid oder deren Gemische mit vorteilhaften Eigenschaften zur Verfügung zu stellen. Eine weitere Aufgabe besteht darin, Umsatz und Selektivität der Herstellung von Monoolefinen bei der katalytischen Dehydrierung gesättigter Kohlenwasserstoffe mit Hilfe der vorgenannten Verbindungen oder deren Gemischen zu steigern.

Diese Aufgaben werden durch die erfindungsgemäßen Metalloxidpulver oder deren Gemische gemäß Anspruch 1 bzw. die erfindungsgemäßen Metallmischoxidpulver gemäß Anspruch 4 oder deren Gemische und deren Verwendung als Dehydrierkatalysatoren gelöst.

Gegenstand der vorliegenden Erfindung sind neue Metallmischoxidpulver aus Chrom(III)-oxid und Titan-(IV)-oxid, Chrom(III)-oxid und Vanadin(V)-oxid, Titan(IV)-oxid und Vanadin(V)-oxid oder deren Gemische. Diese neuen Metallmischoxidpulver unterscheiden sich von den einfachen Mischungen der kommerziell erhältlichen Einzeloxide, aber auch von den Mischungen der ebenfalls zum Gegenstand der Erfindung gehörenden Metalloxidpulver, nämlich Chrom(III)-oxid-, Titan(IV)-oxid-, Vanadin(V)-oxid-Pulver mit einer BET-Oberfläche von 5 bis 50 m$^2$/g und durchschnittlichen Teilchendurchmessern von 25 bis 350 nm. Die neuen Metalloxidpulver werden hergestellt aus den verdampften Metallverbindungen, nämlich Chromylchlorid, Titantetrachlorid und Vanadylchlorid (Patentanspruch 1) und die neuen Metallmischoxidpulver werden hergestellt aus Gemischen der vorgenannten, verdampften Metallverbindungen (Patentanspruch 4).

Die Herstellung der Metalloxidpulver bzw. der Metallmischoxidpulver aus den vorgenannten verdampften flüchtigen Metallverbindungen erfolgt in Gegenwart eines Edelgases, von Wasserstoff, Stickstoff, Schwefelhexafluorid oder Sauerstoff oder einer Mischung der vorgenannten Gase durch kontinuierliche Laserpyrolyse bei einem Druck von 10 bis 1000 mbar.

Gegenstand der Erfindung ist weiter die Verwendung der vorgenannten Metallmischoxidpulver oder deren Gemischen sowie die Verwendung von einem Vertreter oder von einem Gemisch von Vertretern der Gruppe Chrom(III)-oxid-, Titan(IV)-oxid-, Vanadin(V)-oxid-Pulver zur katalytischen Dehydrierung verzweigter oder unverzweigter gesättigter oder ungesättigter Kohlenwasserstoffe mit 2 bis 6 Kohlenstoffatomen oder deren Gemischen bei einer Temperatur von 300 bis 700°C und einem Druck von 0,1 bis 20 bar.

Es ist bevorzugt, die katalytische Dehydrierung in Gegenwart von Wasserstoff, Wasserdampf, Sauerstoff oder von Gemischen derselben durchzuführen.

Es ist weiter bevorzugt, die erfindungsgemäßen Metallmischoxidpulver oder deren Gemische sowie die erfindungsgemäßen Metalloxidpulver oder deren Gemische in Gegenwart von bis 90 Gew.-% Aluminiumhydroxidpulver in Form von mittels eines Bindemittels hergestellter Formkörper zur katalytischen Dehydrierung der genannten Kohlenwasserstoffe einzusetzen.

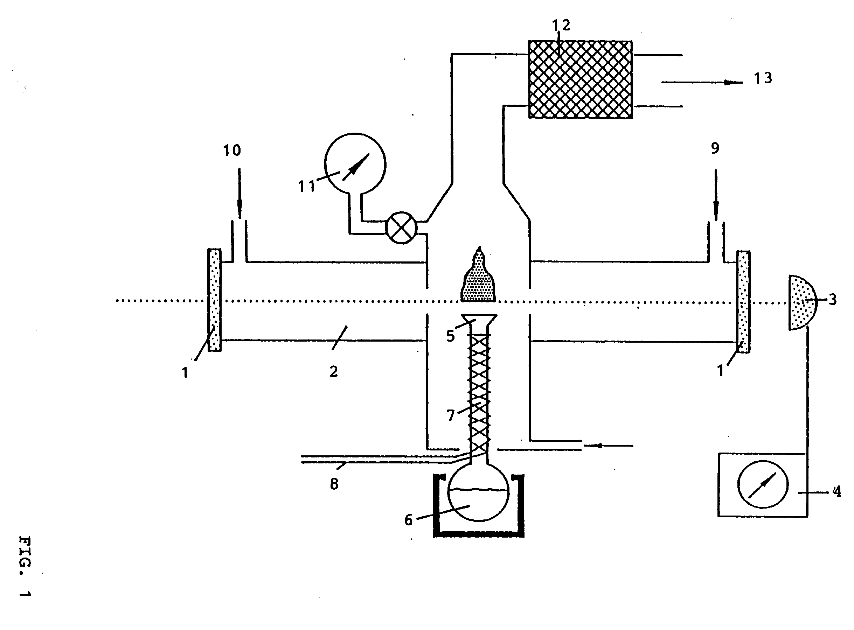

Die Apparaturen (vgl. Fig. 1), die für die Zersetzung der gasförmigen Ausgangsverbindungen und die Abscheidung der erhaltenen festen Produkte wie Titan(IV)-oxid ($TiO_2$), Vanadin(V)-oxid ($V_2O_5$) sowie Chrom-(III)-oxid ($Cr_2O_3$) bzw. Metallmischoxidpulver benutzt wurden, sind aus Glas. Der Laserstrahl tritt durch NaCl-Fenster (1) in die Zelle (2), verläßt sie auch wieder durch solche und endet in einem Detektor (3) mit Leistungsmeßgerät (4). Der eingesetzte $CO_2$-Laser weist ein Emissionsspektrum mit über 100 Linien auf.

Der eingesetzte $CO_2$-Dauerstrichlaser weist einen Wirkungsgrad von 15 % auf und liefert auf der Linie bei 984 $cm^{-1}$ 75 bis 85 Watt, auf der Linie bei 945 $cm^{-1}$ etwa 100 Watt und auf der Linie bei 1042 $cm^{-1}$ etwa 75 Watt. Die Leistungsdichte beträgt bei 80 Watt Gesamtleistung ohne Fokussierung ca. $3 * 10^3$ Watt/$cm^2$ und mit Fokussierung ca. $3 * 10^4$ Watt/$cm^2$.

Die gasförmigen Edukte strömen aus einer schlitzförmigen Düse (5) oder einer Lochdüse senkrecht zum Laserstrahl. Vor der Reaktion werden die Ausgangsverbindungen im Vorratskolben (6) mit Trockeneis/Methanol gekühlt, um ein vorzeitiges Verdampfen zu verhindern. Während der Reaktion muß der Vorratskolben leicht erwärmt werden. Das Zuleitungsrohr (7) zur Düse wird mit einem Heizdraht (8) erwärmt, um eine Kondensation der Ausgangsverbindung zu verhindern.

Ohne Fokussierung hat der Laserstrahl einen Durchmesser von etwa 2 mm, mit Fokussierung einen Durchmesser von 0,5 bis 0,7 mm.

Um die Düse wird ein Gasstrom, bestehend aus einem Edelgas, Wasserstoff, Stickstoff, Schwefelhexafluorid oder Sauerstoff oder einer Mischung der vorgenannten Gase geleitet, um eine laminare Strömung der Edukte und Produkte aufrechtzuerhalten, bzw. um die Reaktion zu beeinflussen. An den NaCl-Fenstern wird über die Leitungen (9) und (10) auch das jeweilige Zusatzgas eingeleitet, um ein Verschmutzen der Fenster durch die bei der Laserpyrolyse entstehenden Pulver zu verhindern. Der Gesamtdruck wird durch Regulation der Pumprate typischerweise bei 50 mbar gehalten und am Manometer (11) abgelesen. Eine Reaktion ist bei einem Gesamtdruck im Bereich von 10 bis 1000 mbar zu erreichen.

Das Pulver wird auf einem Membranfilter oder in einem Faserfilter (12) gesammelt. Kondensierbare Gase und nicht umgesetztes Edukt werden in nachgeschalteten Kühlfallen (13) ausgefroren und später verworfen, bzw. nach Aufarbeitung wieder verwendet.

Der Laserstrahl kann mit einer ZnSe-Sammellinse mit einer Brennweite von f = 30 cm oder einer NaCl-Sammellinse mit einer Brennweite von f = 20 cm auf einen Punkt über der Düse fokussiert werden. Zwecks Erhöhung der Ausbeute wurde auch eine Multipass-Zelle benutzt, in der die Strömung der Ausgangsverbindung den Laserstrahl senkrecht mehrmals passiert. Dem gleichen Zweck dient der Einsatz einer Zelle, in der der Laserstrahl durch vier kreuzförmig angeordnete Eintrittsöffnungen insgesamt viermal in der waagerechten Ebene durch das gleiche Gebiet über der Düse läuft.

Nachfolgend werden die Erfindung weiter erläutert und die Versuche zur Bildung von $Cr_2O_3$-, $TiO_2$- sowie $V_2O_5$-Pulver beschrieben.

Die Zersetzung von Titantetrachlorid ($TiCl_4$) im Argon-Sauerstoffstrom erfolgt in der oben beschriebenen Apparatur. $TiCl_4$ absorbiert bei 984 $cm^{-1}$. Die Absorption von $TiCl_4$ auf dieser Linie und auch im gesamten Emissionsbereich des $CO_2$-Lasers ist allerdings gering. Unter stärkerem Aufheizen des Vorratskolbens erreicht man eine Reaktion mit Pulverbildung und eine helle rosaviolette Flamme. Die Ausbeute liegt bei wenigen Prozent.

Eine Röntgendiffraktometer-Untersuchung zeigt, daß das Reaktionsprodukt aus den beiden Titandioxidmodifikationen Rutil und Anatas besteht.

TEM-Aufnahmen zeigen, daß die entstandenen $TiO_2$-Partikel durchschnittlich 25 nm groß sind und eine sehr enge Größenverteilung besitzen.

Die Zersetzung von Vanadylchlorid ($VOCl_3$) erfolgt ebenfalls in obenbeschriebener Apparatur. Die Bestrahlung findet auf einer P-Linie des Lasers bei 1042 $cm^{-1}$ statt. $VOCl_3$ absorbiert die $CO_2$-Laserstrahlung besser als $TiCl_4$, aber immer noch viel weniger als $CrO_2Cl_2$. Im Argon-Sauerstoffstrom ist eine kontinuierliche Reaktion mit Pulverbildung und einer fahlgelben Flamme möglich. Die Ausbeuten an gelbbraunem $V_2O_5$ liegen jedoch nur bei einigen Prozent. Diffraktometer-Untersuchungen zeigen, daß das entstandene $V_2O_5$ röntgenamorph ist. Zersetzungen auf anderen Linien sind nicht möglich.

Im Argon-Wasserstoffstrom ist bisher noch keine kontinuierliche Reaktion möglich. Eine schwache Reaktion mit kleiner, fahler Flamme lieferte nur wenig schwarzes Vanadin(III)-oxid, mit einer Ausbeute von unter einem Prozent.

Als geeignetste leicht verdampfbare Chromverbindung zur Herstellung von $Cr_2O_3$ als Katalysatorsubstanz erwies sich $CrO_2Cl_2$. Die thermische Zersetzung von $CrO_2Cl_2$ mit konventionellen Methoden führt bei

EP 0 371 152 B1

Temperaturen bis 380°C vor allem zur Bildung von Chrom(IV)-oxid. Eine Temperatursteigerung auf über 400°C führt unter Sauerstoffabspaltung zu stabilem Chrom(III)-oxid.

Die $CO_2$-Laser-Linie bei 984 cm$^{-1}$ ist die geeigneteste für die Zersetzung von $CrO_2Cl_2$.

Auch auf benachbarten Linien ist Pyrolyse möglich.

Wird als Trägergas Schwefelhexafluorid ($SF_6$) benutzt, kann die Bestrahlung zur Bildung von $Cr_2O_3$ auch auf der Absorptionsbande von $SF_6$ bei 945 cm$^{-1}$ erfolgen. $CrO_2Cl_2$ zersetzt sich jedoch nicht bei der Bestrahlung mit $CO_2$-Laserlicht der Wellenzahl 945 cm$^{-1}$, wenn ein anderes Trägergas als $SF_6$ verwendet wird.

Der $CrO_2Cl_2$-Dampf absorbiert 2 bis 8 Watt der eingestrahlten Laserleistung.

Der $CrO_2Cl_2$-Partialdruck beträgt 2 bis 10 mbar.

Pro Stunde können je nach Versuchsbedingung 1,5 bis 12 g $Cr_2O_3$ synthetisiert werden.

Die Flamme bei der Zersetzung von $CrO_2Cl_2$ mit einem Edelgas, Stickstoff, Sauerstoff oder $SF_6$ als Trägergas war orange und je nach Versuchsbedingung 3 bis 20 mm groß und begann 2 bis 4 mm oberhalb der Düse.

Bei den Versuchen mit reinem Wasserstoff brannte die Flamme nur sehr unregelmäßig, war leuchtend hellgelb und begann sofort an der Düsenöffnung oder auch schon in der Düse. Dadurch war eine längere kontinuierliche Versuchsdurchführung mit Pulverproduktion schwierig.

Durch Verdünnung des Wasserstoffs mit Argon auf ein Volumenverhältnis 1 : 8 war ein gleichmäßiger Dauerbetrieb möglich.

Bei den Versuchen mit Wasserstoff und Argon war es möglich, nahezu 100 % des Chromylchlorids umzusetzen; bei den Versuchen mit Argon allein, Stickstoff oder Sauerstoff konnten nur 45 bis 70 umgesetzt werden. Bei den Versuchen mit $SF_6$ als Trägergas und Absorber der Laserstrahlung wurden nur 30 % $CrO_2Cl_2$ umgesetzt. Helium als Trägergas verschlechterte die Ausbeute auf etwa 20 %.

Dauerstrich-Laserstrahlung von beispielsweise 100 bis 1000 W wird kontinuierlich direkt in den gasförmigen Metallverbindungen, beispielsweise $CrO_2Cl_2$, oder aber in einem Energieübertragergas, z. B. $SF_6$, absorbiert und dadurch die chemische Reaktion zu den neuen Oxiden oder Oxidgemischen bewirkt.

Weil die chemische Reaktion durch die Laserstrahlung aufrechterhalten wird, kann auf diese Weise der Reaktionsablauf so gesteuert werden, daß gezielt feinere oder gröbere Pulver hergestellt oder auch mehr oder weniger Fehlstellen im Kristallgitter der Metalloxide oder Metallmischoxide erzeugt werden.

Die Bestimmung der spezifischen Oberfläche der hergestellten $Cr_2O_3$-Pulver erfolgte nach der BET-Methode. Kommerzielles $Cr_2O_3$ hat eine Oberfläche von 2 bis 3 m$^2$/g. Alle nach dem vorliegenden Verfahren synthetisierten Pulver lagen mit ihrer spezifischen Oberfläche um einen Faktor von 5 bis 20 höher.

Das erhaltene $Cr_2O_3$ wurde mit Hilfe der röntgenographischen Guinier-Untersuchungsmethode charakterisiert. Die Linien auf dem Filmstreifen zeigen die gleiche Elementarzelle mit gleichen Abmessungen bei gleichen Linienintensitätsverhältnissen wie käufliches $Cr_2O_3$. Die Proben aus den Versuchen mit Wasserstoff und/oder Argon lagen nach einer transmissionselektronenmikroskopischen Untersuchung (TEM) in ihrer Partikelgröße deutlich unter 100 nm. Im Guinier-Spektrum waren deshalb auch verbreiterte und verwaschene Linien zu erkennen.

Röntgendiffraktometrische Untersuchungen und Röntgenfluoreszenzanalyse erwiesen, daß die hergestellten Pulver aus sehr reinem $Cr_2O_3$ bestehen. Nur das Element Chlor war in geringen Mengen von 400 bis 1500 ppm nachweisbar. Die Proben mit $SF_6$ als Träger- und Absorbergas enthielten nur Sauren von Schwefel (20 ppm).

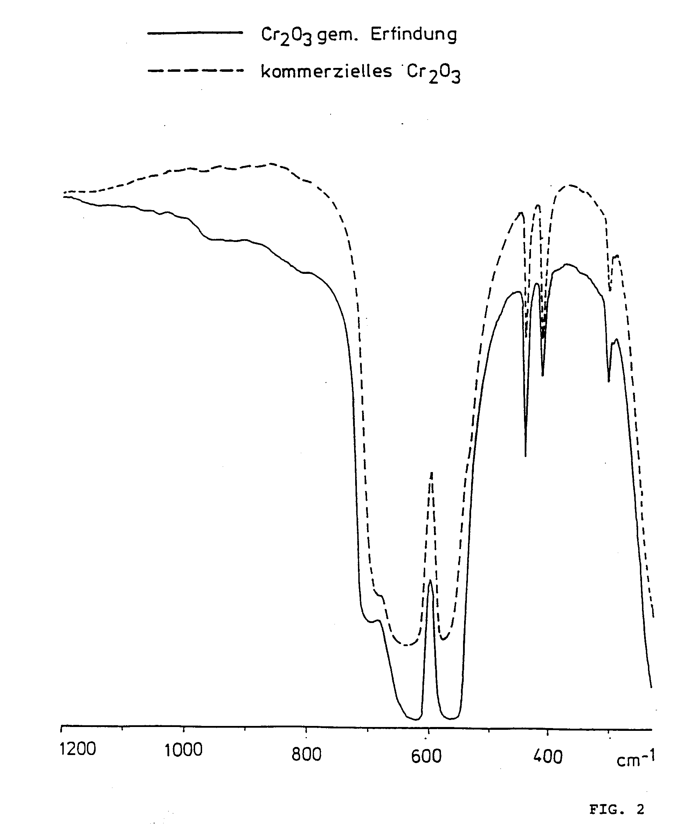

Auch mit Hilfe der IR-Spektroskopie konnte gezeigt werden, daß es sich bei dem erfindungsgemäß hergestellten Produkt um sehr reines $Cr_2O_3$ handelt (vgl. Fig. 2).

Rasterelektronenmikroskopische Untersuchungen (REM) und transmissionselektronenmikroskopische Untersuchungen (TEM) erwiesen die enge Größenverteilung der Partikel. Die durchschnittlichen Teilchengrößen verschiedener $Cr_2O_3$-Pulver lagen zwischen 50 und 350 nm. Zum Vergleich wurde kommerzielles $Cr_2O_3$ mit einer durchschnittlichen Teilchengröße von 800 nm bestimmt.

Bei ESR-Untersuchungen (Elektronen-Spin-Resonanz) zeigen alle erfindungsgemäß synthetisierten Pulver ein anderes magnetisches Verhalten als kommerziell erhältliches $Cr_2O_3$.

Die erfindungsgemäßen Mischoxide werden nach folgenden Verfahren hergestellt: Die verdampften Ausgangsverbindungen werden mit einem in seiner Frequenz durchstimmbaren $CO_2$-Dauerstrichlaser bestrahlt, wobei entweder die Ausgangsverbindung selber oder $SF_6$ als Hilfsgas die Laserenergie absorbieren. Die Umsetzung kann im kontinuierlichen Betrieb mehrere Stunden lang durchgeführt werden. Dazu werden die entstehenden Gase laufend abgepumpt und entstehendes Pulver in Filtern abgefangen.

Bei den Versuchen zur Darstellung von Mischoxiden oder gemischten Oxiden wurde ein in zwei Kammern geteilter Vorratskolben benutzt. Jede Kammer kann getrennt erwärmt werden, um den gewünschten Partialdruck der jeweiligen Ausgangsverbindung einzustellen, dadurch kann das Mischungsverhältnis der Gase frei gewählt werden. Während der Reaktion muß der Vorratskolben leicht erwärmt werden. Beide verdampften Verbindungen strömen dann wieder aus einer gemeinsamen Düse durch den Laserstrahl.

Für die Darstellung eines Mischoxids aus $Cr_2O_3/TiO_2$ wird nach dieser Methode gleichzeitig $CrO_2Cl_2$ und $TiCl_4$ mit einem Edelgas als Trägergas verdampft und im Laserstrahl umgesetzt. Auch die Verwendung anderer Trägergase wie z. B. Stickstoff, Sauerstoff oder Wasserstoff ist möglich. $CrO_2Cl_2$ ist dabei der Sauerstofflieferant für die Bildung von $TiO_2$.

Die Bestrahlung erfolgt auf der gemeinsamen Absorptionslinie von $CrO_2Cl_2$ und $TiCl_4$ bei 984 $cm^{-1}$. Auch bei Bestrahlung mit benachbarten Laserlinien ist Pyrolyse möglich.

Unter diesen Bedingungen ist eine kontinuierliche Reaktion mit Pulverproduktion und mit Flamme möglich, die der bei der Zersetzung von reinem $CrO_2Cl_2$ entspricht. Auf anderen Linien des $CO_2$-Lasers ist keine Reaktion möglich.

Durch die beliebig einstellbare Gaszusammensetzung sind Oxide mit einem breiten Mischungsverhältnis herstellbar. Bei einem Mischungsverhältnis von z. B. $CrO_2Cl_2$ zu $TiCl_4$ wie 3 zu 1 erhält man ein Mischoxid mit einer Gesamtausbeute von etwa 80 %.

Eine Röntgenfluoreszenz-Analyse weist auf Chrom und Titan als Hauptbestandteile hin.

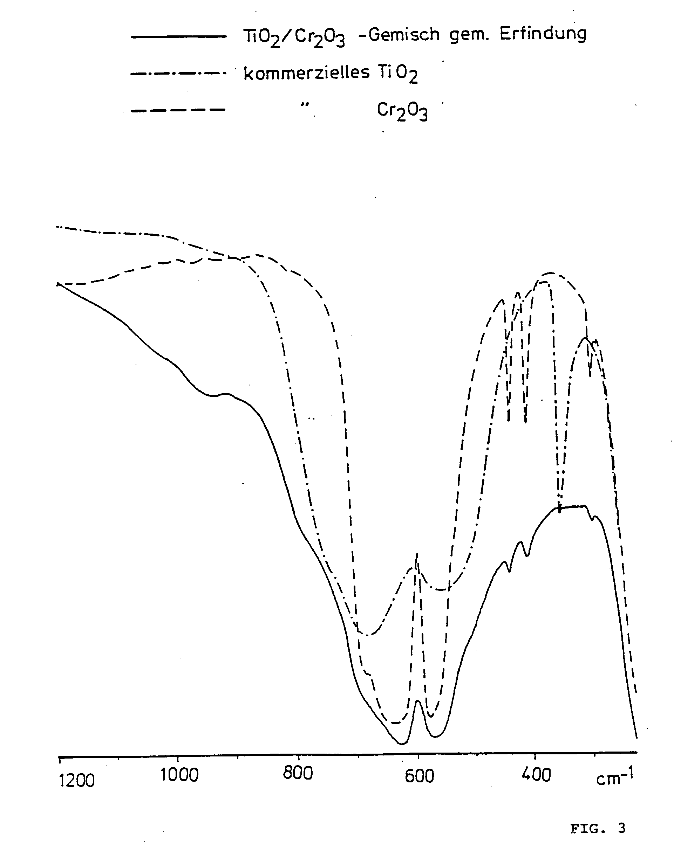

Das IR-Spektrum (vgl. Fig. 3) zeigt die charakteristischen Banden bei 1200 bis 300 $cm^{-1}$ und läßt deutlich erkennen, daß das neue $Cr_2O_3/TiO_2$-Mischoxid eine andere Struktur aufweist als das Gemisch aus kommerziellem $Cr_2O_3$ und kommerziellem $TiO_2$ oder auch des Gemisches aus erfindungsgemäßem $Cr_2O_3$ und $TiO_2$.

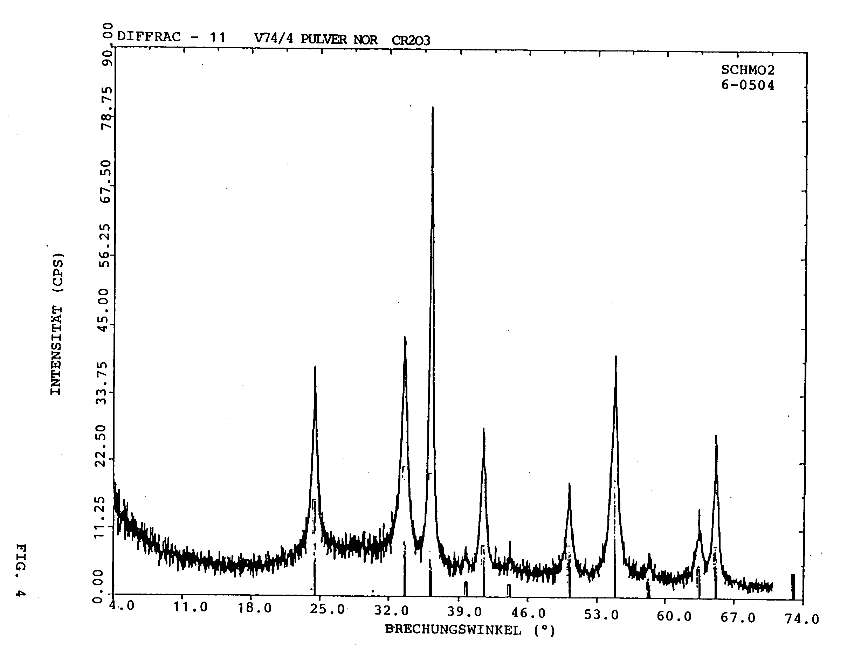

Die Röntgendiffraktometer-Untersuchung (vgl. Fig. 4) zeigt deutlich verbreiterte, dem $Cr_2O_3$ zuzuordnende Banden. Banden einer $TiO_2$-Modifikation sind nicht zu erkennen. Dies deutet darauf hin, daß Titanatome im $Cr_2O_3$-Gitter Plätze von Chromatomen ersetzt haben.

Für die Darstellung von $Cr_2O_3/V_2O_5$-Gemischen werden $CrO_2Cl_2$ und $VOCl_3$ gleichzeitig im Laserstrahl umgesetzt, wobei ebenfalls ein Edelgas als Trägergas dient.

Erfindungsgemäß wurde eine Steigerung des Umsatzes und der Ausbeute der Dehydrierung gesättigter Kohlenwasserstoffe mit geringer Kohlenstoffzahl unter Verwendung von mittels Laserpyrolyse hergestellter Metallmischoxidpulver oder deren Gemischen sowie Metalloxidpulver oder den Gemischen so hergestellter Metalloxidpulver festgestellt.

Mit aus dem erfindungsgemäß hergestellten $Cr_2O_3$ gefertigten Formkörpern werden nachfolgend am Beispiel der Dehydrierung von Isobutan gegenüber dem Einsatz von käuflich erworbenem $Cr_2O_3$ als Katalysatorsubstanz erhöhte Ausbeute- und Umsatzwerte erhalten.

a) Isobutan wurde bei einer Temperatur von 593°C und einem Druck von 300 mbar durch einen Rohrreaktor, in dem eine Katalysatorschicht fest angeordnet war, geleitet. Die Reaktionsdauer betrug jeweils 10 Minuten. Die Katalysatorbelastung betrug 2 g Isobutan pro Gramm Katalysator und Stunde.

Die Katalysatorschicht bestand aus einer vorgegebenen Menge von ca. 3 x 4 mm großen Katalysatorpellets, die wie folgt hergestellt wurden:

Zu 97, 5 Gew.-Teilen $Cr_2O_3$ werden 2,5 Gew.-Teile Natriumwasserglas gegeben und daraus durch Zugabe von Wasser eine streichfähige Paste hergestellt. Aus dieser Paste werden Formkörper von 3 x 4 mm hergestellt. Diese Pellets werden bei 150°C mehrere Stunden getrocknet und anschließend 3 Stunden bei 550°C calciniert.

Nach der Reaktion erfolgte eine Spülung mit Stickstoff und anschließend die Regeneration des Katalysators durch Abbrennen in einem Stickstoff/Sauerstoffgemisch.

Die Reaktionsprodukte wurden am Reaktoraustritt gaschromatographisch untersucht. Der auf dem Katalysator abgeschiedene Kohlenstoff wurde durch Abbrennen des Katalysators mit Luft als $CO_2$ am Infrarot-Analysator bestimmt.

A. Käufliches konventionell hergestelltes $Cr_2O_3$
   (Vergleichsversuch)

---------------------------------------------------

Einsatz Isobutan 99,9 Gew.-%

Ergebnis der GC- und Infrarot-Analyse am
Reaktorausgang


GC-Analyse

| | |
|---|---|
| Methan | 0,09 Gew.-% |
| Propan | 0,01 Gew.-% |
| Propen | 0,20 Gew.-% |
| Isobutan | 99,09 Gew.-% |
| n-Butan | 0,01 Gew.-% |
| Isobuten | 0,57 Gew.-% |
| $H_2$ | 0,02 Gew.-% |

<u>Infrarot-Analyse</u>

<u>Kohlenstoff</u>                           0 Gew.-%

| | |
|---|---|
| Umsatz (mol-%) | 1 |
| Selektivität (mol-%) | 73 |
| Ausbeute (mol-%) | 1 |

B. Mittels Laserpyrolyse in einem Wasserstoff-Edelgas-Gemisch als Trägergas hergestelltem $Cr_2O_3$

------------------------------------------------

Einsatz Isobutan 99,9 Gew.-%

Ergebnis der GC- und Infrarot-Analyse am Reaktorausgang

<u>GC-Analyse</u>

| | |
|---|---|
| Methan | 0,92 Gew.-% |
| Ethan | 0,28 Gew.-% |
| Ethen | 0,16 Gew.-% |
| Propan | 0,41 Gew.-% |
| Propen | 1,11 Gew.-% |
| Isobutan | 58,23 Gew.-% |
| n-Butan | 0,09 Gew.-% |
| Buten-1 | 0,15 Gew.-% |
| Isobuten | 33,84 Gew.-% |
| t-Buten-2 | 0,28 Gew.-% |
| c-Buten-2 | 0,19 Gew.-% |
| Butadien-1,3 | 0,14 Gew.-% |
| Kohlenwasserstoffe $> C_5$ | 0,12 Gew.-% |
| $H_2$ | 1,88 Gew.-% |
| CO | 0,7 Gew.-% |

<u>Infrarot-Analyse</u>

<u>Kohlenstoff</u>                             <u>1,53 Gew.-%</u>

Umsatz (mol-%)                       42

Selektivität (mol-%)          84

Ausbeute (mol-%)               35

b) Isobutan wurde bei einer Temperatur von 593 °C und einem Druck von 300 mbar in derselben Apparatur wie bei a) dehydriert. Die Reaktionsdauer betrug wiederum 10 Minuten, aie Katalysatorbelastung jedoch nur 0,5 g Isobutan pro Gramm Katalysator und Stunde.

Die Katalysatorschicht bestand aus Pellets, die wie folgt hergestellt wurden:

15 Gew.-Teile Chromoxid-Pulver werden mit 85 Gew.-Teilen Aluminiumhydroxid gut vermischt. Zu 97,5 Gew.-Teilen dieser Mischung werden 2,5 Gew.-Teile Natriumwasserglaslösung gegeben und daraus durch Zugabe von weiterem Nasser eine streichfähige Paste hergestellt.

Aus dieser Paste werden Formkörper von 3 x 4 mm hergestellt. Diese Pellets werden bei 150 °C mehrere Stunden getrocknet und anschließend 3 Stunden bei 550 °C calciniert.

Die Regeneration des Katalysators sowie aie Analyse der Reaktionsprodukte erfolgte analog a).

A. Käufliches konventionell hergestelltes $Cr_2O_3$
   (Vergleichsversuch)

--------------------------------------------------------

Einsatz Isobutan 99,9 Gew.-%
Ergebnis der GC- und Infrarot-Analyse am
Reaktorausgang

GC-Analyse

| | |
|---|---|
| Ethen | 0,18 Gew.-% |
| Methan | 2,83 Gew.-% |
| Propan | 0,11 Gew.-% |
| Propen | 1,87 Gew.-% |
| Isobutan | 84,65 Gew.-% |
| Buten-1 | 0,11 Gew.-% |
| Isobuten | 7,4 Gew.-% |
| t-Buten-2 | 0,08 Gew.-% |
| c-Buten-2 | 0,06 Gew.-% |
| $H_2$ | 1,82 Gew.-% |
| CO | 0,36 Gew.-% |
| $CO_2$ | 0,1 Gew.-% |
| Butadien-1,3 | 0,04 Gew.-% |

Infrarot-Analyse

| | |
|---|---|
| Kohlenstoff | 0,44 Gew.-% |

| | |
|---|---|
| Umsatz | 15 |
| Selektivität | 50 |
| Ausbeute | 8 |

9

B. Mittels Laserpyrolyse in Argon als Trägergas
hergestelltem $Cr_2O_3$

----------------------------------------------

Einsatz Isobutan 99,9 Gew.-%
Ergebnis der GC und Infrarot-Analyse am
Reaktorausgang

GC-Analyse

| | |
|---|---|
| Methan | 1,27 Gew.-% |
| Ethan | 0,28 Gew.-% |
| Ethen | 0,15 Gew.-% |
| Propan | 0,5 Gew.-% |
| Propen | 1,95 Gew.-% |
| Isobutan | 53,89 Gew.-% |
| n-Butan | 0,11 Gew.-% |
| Buten-1 | 0,21 Gew.-% |
| Isobuten | 36,50 Gew.-% |
| t-Buten-2 | 0,29 Gew.-% |
| c-Buten-2 | 0,20 Gew.-% |
| Butadien-1,3 | 0,16 Gew.-% |
| Kohlenwasserstoffe $> C_5$ | 0,03 Gew.-% |
| $H_2$ | 2,74 Gew.-% |
| CO | 0,3 Gew.-% |

Infrarot-Analyse

| | |
|---|---|
| Kohlenstoff | 1,93 Gew.-% |

| | |
|---|---|
| Umsatz | 46 |
| Selektivität | 82 |
| Ausbeute | 38 |

c) Isobutan wurde bei einer Temperatur von 566°C und einem Druck von 300 mbar in derselben Apparatur wie bei a) dehydriert. Die Reaktionsdauer betrug 10 Minuten und die Katalysatorbelastung 1 g Isobutan pro Gramm Katalysator und Stunde.

Die Katalysatorschicht bestand aus Pellets, die wie folgt hergestellt wurden:

Die Einsatzstoffe $Cr_2O_3$ (61,5 Gew.-%) Melamin (0,5 Gew.-%) als Porenbildner und Böhmit (3 Gew.-%) (Pural SB, Fa. Condea) als Bindemittel, werden in den in der Anlage genannten Gewichtsverhältnissen trocken innig vermischt. Zu diesem Gemisch wird bei ständigem Rühren so lange 1 M Ameisensäure (35 Gew.-%) zugesetzt, bis eine gut knetbare Masse entsteht, aus welcher in einer geeigneten Form die zunächst wasserfeuchten Katalysatorpellets hergestellt werden.

Die erhaltenen Formkörper werden im Stickstoff-Strom bei 50°C 2 bis 5 Stunden getrocknet, anschließend 5 Stunden bei 550°C calciniert und bestehen anschließend zu 95 Gew.-% aus $Cr_2O_3$ und zu 5 Gew.-% aus Böhmit.

Die Regeneration des Katalysators sowie die Analyse der Reaktionsprodukte erfolgte analog a).

## A. Käufliches konventionell hergestelltes $Cr_2O_3$ (Vergleichsversuch)

---------------------------------------------------------

Einsatz Isobutan 99,9 Gew.-%

Ergebnis der GC- und Infrarot-Analyse am Reaktorausgang

### GC-Analyse

| | |
|---|---|
| Methan | 0,22 Gew.-% |
| Ethan | 0,02 Gew.-% |
| Ethen | 0,02 Gew.-% |
| Propan | 0,08 Gew.-% |
| Propen | 0,35 Gew.-% |
| Isobutan | 77,73 Gew.-% |
| n-Butan | 0,02 Gew.-% |
| Isobuten | 19,97 Gew.-% |
| t-Buten-2 | 0,07 Gew.-% |
| c-Buten-2 | 0,04 Gew.-% |
| $H_2$ | 1,22 Gew.-% |
| CO | 0,03 Gew.-% |

### Infrarot-Analyse

| | |
|---|---|
| Kohlenstoff | 0,25 Gew.-% |

| | |
|---|---|
| Umsatz (mol-% | 22 |
| Selektivität (mol-%) | 93 |
| Ausbeute (mol-%) | 20 |

11

B. Mittels Laserpyrolyse in Stickstoff als Trägergas hergestelltem $Cr_2O_3$

--------------------------------------------------------

Einsatz Isobutan 99,9 Gew.-%

Ergebnis der GC- und Infrarot-Analyse am Reaktorausgang

GC-Analyse

| | |
|---|---|
| Methan | 0,88 Gew.-% |
| Ethan | 0,22 Gew.-% |
| Ethen | 0,12 Gew.-% |
| Propan | 0,38 Gew.-% |
| Propen | 0,87 Gew.-% |
| Isobutan | 60,68 Gew.-% |
| n-Butan | 0,28 Gew.-% |
| Buten-1 | 0,43 Gew.-% |
| Isobuten | 31,38 Gew.-% |
| t-Buten-2 | 0,58 Gew.-% |
| c-Buten-2 | 0,40 Gew.-% |
| Butadien-1,3 | 0,19 Gew.-% |
| Kohlenwasserstoffe $>$ $C_5$ | 0,04 Gew.-% |
| $H_2$ | 1,90 Gew.-% |
| CO | 0,28 Gew.-% |

Infrarot-Analyse

| | |
|---|---|
| Kohlenstoff | 1,45 Gew.-% |

| | |
|---|---|
| Umsatz (mol-%) | 39 |
| Selektivität (mol-%) | 83 |
| Ausbeute (mol-%) | 32 |

C. Mittels Laserpyrolyse in Sauerstoff als Trägergas
   hergestelltem $Cr_2O_3$

------------------------------------------------------------

Einsatz Isobutan 99,9 Gew.-%
Ergebnis der GC- und Infrarot-Analyse am
Reaktorausgang

GC-Analyse

| | |
|---|---|
| Methan | 1,91 Gew.-% |
| Ethan | 0,56 Gew.-% |
| Ethen | 0,15 Gew.-% |
| Propan | 0,93 Gew.-% |
| Propen | 1,17 Gew.-% |
| Isobutan | 46,51 Gew.-% |
| n-Butan | 0,30 Gew.-% |
| Buten-1 | 0,30 Gew.-% |
| Isobuten | 39,37 Gew.-% |
| t-Buten-2 | 0,40 Gew.-% |
| c-Buten-2 | 0,27 Gew.-% |
| Butadien-1,3 | 0,10 Gew.-% |
| Kohlenwasserstoffe $> C_5$ | 0,03 Gew.-% |
| $H_2$ | 3,15 Gew.-% |
| $CO_2$ | 0,04 Gew.-% |
| CO | 1,08 Gew.-% |

Infrarot-Analyse

| | |
|---|---|
| kohlenstoff | 4,02 Gew.-% |

| | |
|---|---|
| Umsatz (mol-%) | 53 |
| Selektivität (mol-%) | 76 |
| Ausbeute (mol-%) | 40 |

D. Mittels Laserpyrolyse in Sauerstoff als Trägergas
hergestelltem $Cr_2O_3$
Pellets wie unter C., jedoch mit $KHCO_3$-Lösung
getränkt

---------------------------------------------------------

Einsatz Isobutan 99,9 Gew.-%
Ergebnis der GC- und Infrarot-Analyse am
Reaktorausgang

GC-Analyse

| | |
|---|---|
| Methan | 1,20 Gew.-% |
| Ethan | 0,79 Gew.-% |
| Ethen | 0,08 Gew.-% |
| Propan | 0,67 Gew.-% |
| Propen | 0,96 Gew.-% |
| Isobutan | 46,44 Gew.-% |
| n-Butan | 0,24 Gew.-% |
| Isobuten | 44,30 Gew.-% |
| t-Buten-2 | 0,30 Gew.-% |
| c-Buten-2 | 0,21 Gew.-% |
| Butadien-1,3 | 0,10 Gew.-% |
| Kohlenwasserstoffe $> C_5$ | 0,03 Gew.-% |
| $H_2$ | 2,56 Gew.-% |
| $CO_2$ | 0,14 Gew.-% |
| CO | 0,48 Gew.-% |

Infrarot-Analyse

| | |
|---|---|
| Kohlenstoff | 2,05 Gew.-% |

| | |
|---|---|
| Umsatz (mol-%) | 53 |
| Selektivität (mol-%) | 86 |
| Ausbeute (mol-%) | 46 |

**Patentansprüche**
**Patentansprüche für folgenden Vertragsstaat : ES**

1.  Verfahren zur Herstellung von Metalloxidpulvern aus Chrom (III)-oxid- oder Titan (IV)-oxid- oder Vanadin (V)-oxid-Pulvern mit einer BET-Oberfläche von 5 bis 50 $m^2/g$ und durchschnittlichen Teilchendurchmessern von 25 bis 350 nm, durch kontinuierliche Laserpyrolyse von verdampftem Chromylchlo-

14

rid, in Gegenwart eines Edelgases, Stickstoff, Schwefelhexafluorid, Sauerstoff oder einer Mischung eines der vorgenannten Gase mit dem Edelgas oder einer Mischung von Wasserstoff mit Argon bzw. aus verdampftem Titantetrachlorid oder Vanadylchlorid in einem Argon-Sauerstoffstrom bei einem Druck von 10 bis 1 000 mbar.

2. Verwendung von einem Metalloxidpulver oder von einem Gemisch von Metalloxidpulvern hergestellt nach Anspruch 1 zur katalytischen Dehydrierung von Kohlenwasserstoffen mit 2 bis 6 Kohlenstoffatomen oder deren Gemischen bei einer Temperatur von 300 bis 700 °C und einem Druck von 0,1 bis 20 bar, ggf. in Gegenwart von Wasserstoff, Wasserdampf, Sauerstoff oder von Gemischen derselben.

3. Verwendung nach Anspruch 2, dadurch gekennzeichnet, daß das genannte Metalloxidpulver oder das genannte Gemisch von Metalloxidpulvern in Gegenwart von bis zu 90 Gew.-% Aluminiumhydroxidpulver in Form von mittels eines Bindemittels hergestellten Formkörpern vorliegen.

4. Verfahren zur Herstellung von Metallmischoxidpulvern aus Chrom (III)-oxid und Titan (IV)-oxid oder Chrom (III)-oxid und Vanadin (V)-oxid oder Titan (IV)-oxid und Vanadin(V)-oxid oder deren Gemische mit einer BET-Oberfläche von 5 bis 50 m$^2$/g und durchschnittlichen Teilchendurchmessern von 25 bis 350 nm, durch kontinuierliche Laserpyrolyse von Gemischen der verdampften Metallverbindungen, nämlich Chromylchlorid und Titantetrachlorid, Chromylchlorid und Vanadylchlorid bzw. Titantetrachlorid und Vanadylchlorid in Gegenwart von Wasserstoff, Stickstoff, Schwefelhexafluorid, Sauerstoff, einer Mischung eines der vorgenannten Gase mit einem Edelgas oder eines Edelgases bei einem Druck von 10 bis 1 000 mbar.

5. Verwendung von Metallmischoxidpulver oder deren Gemischen hergestellt nach Anspruch 4 zur katalytischen Dehydrierung von Kohlenwasserstoffen mit 2 bis 6 Kohlenstoffatomen oder deren Gemischen bei einer Temperatur von 300 bis 700 °C und einem Druck von 0,1 bis 20 bar, ggf. in Gegenwart von Wasserstoff, Wasserdampf, Sauerstoff oder von Gemischen derselben.

6. Verwendung nach Anspruch 5, dadurch gekennzeichnet, daß das genannte Metallmischoxidpulver oder die genannten Gemische in Gegenwart von bis zu 90 Gew.-% Aluminiumhydroxidpulver in Form von mittels eines Bindemittels hergestellten Formkörpern vorliegen.

**Patentansprüche für folgenden Vertragsstaat : GR**

1. Metalloxidpulver aus Chrom (III)-oxid- oder Titan(IV)-oxid- oder Vanadin (V)-oxid-Pulver mit einer BET-Oberfläche von 5 bis 50 m$^2$/g und durchschnittlichen Teilchendurchmessern von 25 bis 350 nm, hergestellt aus verdampftem Chromylchlorid, in Gegenwart eines Edelgases, Stickstoff, Schwefelhexafluorid, Sauerstoff oder einer Mischung eines der vorgenannten Gase mit dem Edelgas oder einer Mischung von Wasserstoff mit Argon bzw. aus verdampftem Titantetrachlorid oder Vanadylchlorid in einem Argon-Sauerstoffstrom durch kontinuierliche Laserpyrolyse bei einem Druck von 10 bis 1 000 mbar.

2. Verwendung von einem Metalloxidpulver oder von einem Gemisch von Metalloxidpulvern nach Anspruch 1 zur katalytischen Dehydrierung von Kohlenwasserstoffen mit 2 bis 6 Kohlenstoffatomen oder deren Gemischen bei einer Temperatur von 300 bis 700 °C und einem Druck von 0,1 bis 20 bar, ggf. in Gegenwart von Wasserstoff, Wasserdampf, Sauerstoff oder von Gemischen derselben.

3. Verwendung nach Anspruch 2, dadurch gekennzeichnet, daß das genannte Metalloxidpulver oder das genannte Gemisch von Metalloyidpulvern in Gegenwart von bis zu 90 Gew.-% Aluminiumhydroxidpulver in Form von mittels eines Bindemittels hergestellten Formkörpern vorliegen.

4. Metallmischoxidpulver aus Chrom(III)-oxid und Titan(IV)-oxid oder Chrom(III)-oxid und Vanadin(V)-oxid oder Titan(IV)-oxid und Vanadin(V)-oxid oder deren Gemische mit einer BET-Oberfläche von 5 bis 50 m$^2$/g und durchschnittlichen Teilchendurchmessern von 25 bis 350 nm, hergestellt aus Gemischen der verdampften Metallverbindungen, nämlich Chromylchlorid und Titantetrachlorid, Chromylchlorid und Vanadylchlorid bzw. Titantetrachlorid und Vanadylchlorid in Gegenwart von Wasserstoff, Stickstoff, Schwefelhexafluorid, Sauerstoff, einer Mischung eines der vorgenannten Gase mit einem Edelgas oder eines Edelgases durch kontinuierliche Laserpyrolyse bei einem Druck von 10 bis 1 000 mbar.

**5.** Verwendung von Metallmischoxidpulver oder deren Gemischen nach Anspruch 4 zur katalytischen Dehydrierung von Kohlenwasserstoffen mit 2 bis 6 Kohlenstoffatomen oder deren Gemischen bei einer Temperatur von 300 bis 700 °C und einem Druck von 0,1 bis 20 bar, ggf. in Gegenwart von Wasserstoff, Wasserdampf, Sauerstoff oder von Gemischen derselben.

**6.** Verwendung nach Anspruch 5, dadurch gekennzeichnet, daß das genannte Metallmischoxidpulver oder die genannten Gemische in Gegenwart von bis zu 90 Gew.-% Aluminiumhydroxidpulver in Form von mittels eines Bindemittels hergestellten Formkörpern vorliegen.

**Claims**
**Claims for the following Contracting State : ES**

**1.** Process for producing a metal oxide powder consisting of chromium (III) oxide, titanium (IV) oxide or vanadium (V) oxide powder having a BET-surface area of 5 to 50 $m^2/g$ and average particle diameters of 25 to 350 nm, by continuos laser pyrolysis of vaporised chromyl chloride, titanium tetrachloride or vanadyl chloride, respectively, in the presence of hydrogen, nitrogen, sulphur hexafluoride, oxygen, a mixture of one of the aforementioned gases with a noble gas, or a noble gas, at a pressure of 10 to 1000 mbar.

**2.** Use of a metal oxide powder or a mixture of metal oxide powders as claimed in claim 1 for catalytic dehydrogenation of hydrocarbons comprising 2 to 6 carbon atoms, or a mixture of the same, at a temperature of 300 to 700°C and a pressure of 0.1 to 20 bar, optionally in the presence of hydrogen, steam, oxygen or mixtures of the same.

**3.** Use as claimed in claim 2, characterized in that the said metal oxide powder or the said mixture of metal oxide powders are present together with up to 90% by weight of aluminium hydroxide powder in the form of shaped bodies produced with the aid of a binding agent.

**4.** Process for producing mixed metal oxide powders consisting of chromium (III) oxide and titanium (IV) oxide or chromium (III) oxide and vanadium (V) oxide or titanium (IV) oxide and vanadium (V) oxide or mixtures of the same having a BET-surface area of 5 to 50 $m^2/g$ and average particle diameters of 25 to 350 nm, by continuos laser pyrolysis of mixtures of vaporised metal compounds namely chromyl chloride and titanium tetrachloride, chromyl chloride and vanadyl chloride, or titanium tetrachloride and vanadyl chloride, respectively, in the presence of hydrogen, nitrogen, sulphur hexafluoride, oxygen, a mixture of one of the aforementioned gases with a noble gas, or a noble gas, at a pressure of 10 to 1000 mbar.

**5.** Use of a mixed metal oxide powder as claimed in claim 4 or a mixture of the same for catalytic dehydrogenation of hydrocarbons comprising 2 to 6 carbon atoms, or a mixture of the latter, at a temperature of 300 to 700°C and a pressure of 0.1 to 20 bar optionally in the presence of hydrogen, steam, oxygen or mixtures of the same.

**6.** Use as claimed in claim 5, characterized in that the said mixed metal oxide powder or the said mixtures are present together with up to 90% by weight of aluminium hydroxide powder in the form of shaped bodies produced with the aid of a binding agent.

**Claims for the following Contracting State : GR**

**1.** A metal oxide powder consisting of chromium (III) oxide, titanium (IV) oxide or vanadium (V) oxide powder having a BET-surface area of 5 to 50 $m^2/g$ and average particle diameters of 25 to 350 nm, produced from vaporised chromyl chloride, titanium tetrachloride or vanadyl chloride, respectively, in the presence of hydrogen, nitrogen, sulphur hexafluoride, oxygen, a mixture of one of the aforementioned gases with a noble gas, or a noble gas, by continuous laser pyrolysis at a pressure of 10 to 1000 mbar.

**2.** Use of a metal oxide powder or a mixture of metal oxide powders as claimed in claim 1 for catalytic dehydrogenation of hydrocarbons comprising 2 to 6 carbon atoms, or a mixture of the same, at a temperature of 300 to 700°C and a pressure of 0.1 to 20 bar, optionally in the presence of hydrogen, steam, oxygen or mixtures of the same.

3.  Use as claimed in claim 2, characterized in that the said metal oxide powder or the said mixture of metal oxide powders are present together with up to 90% by weight of aluminium hydroxide powder in the form of shaped bodies produced with the aid of a binding agent.

4.  Mixed metal oxide powders consisting of chromium (III) oxide and titanium (IV) oxide or chromium (III) oxide and vanadium (V) oxide or titanium (IV) oxide and vanadium (V) oxide or mixtures of the same having a BET-surface area of 5 to 50 $m^2/g$ and average particle diameters of 25 to 350 nm, produced from mixtures of vaporised metal compounds namely chromyl chloride and titanium tetrachloride, chromyl chloride and vanadyl chloride, or titanium tetrachloride and vanadyl chloride, respectively, in the presence of hydrogen, nitrogen, sulphur hexafluoride, oxygen, a mixture of one of the aforementioned gases with a noble gas, or a noble gas, by continuous laser pyrolysis at a pressure of 10 to 1000 mbar.

5.  Use of a mixed metal oxide powder as claimed in claim 4 or a mixture of the same for catalytic dehydrogenation of hydrocarbons comprising 2 to 6 carbon atoms, or a mixture of the latter, at a temperature of 300 to 700°C and a pressure of 0.1 to 20 bar optionally in the presence of hydrogen, steam, oxygen or mixtures of the same.

6.  Use as claimed in claim 5, characterized in that the said mixed metal oxide powder or the said mixtures are present together with up to 90% by weight of aluminium hydroxide powder in the form of shaped bodies produced with the aid of a binding agent.

**Revendications**
**Revendications pour l'Etat contractant suivant : ES**

1.  Procédé pour la fabrication d'une poudre d'oxyde métallique à base de poudre d'oxyde de chrome (III) ou d'oxyde de titane (IV) ou d'oxyde de vanadium (V) ayant une surface spécifique BET de 5 à 50 M2/g et des diamètres moyens de particules allant de 25 à 350 mm, par pyrolyse au laser en continu de chlorure de chromyle, tétrachlorure de titane ou chlorure de vanadyle respectivement, vaporisés, en présence d'hydrogène, d'azote, déhexafluorure de soufre, d'oxygène, d'un mélange de l'un des gaz précités avec un gaz rare, ou d'un gaz rare, sous une pression de 10 à 1000 mbars.

2.  Utilisation d'une poudre d'oxyde métallique ou d'un mélange de poudres d'oxydes métalliques selon la revendication 1, pour la déshydrogénation catalytique d'hydrocarbures ayant de 2 à 6 atomes de carbone ou de mélanges de ceux-ci, à une température de 300 à 700°C et sous une pression de 0,1 à 20 bars éventuellement en présence d'hydrogène, de vapeur d'eau, d'oxygène ou de mélanges de ceux-ci.

3.  Utilisation selon la revendication 2, caractérisée en ce que ladite poudre d'oxyde métallique ou ledit mélange de poudres d'oxydes métalliques se trouvent en présence de jusqu'à 90 % en poids de poudre d'hydroxyde d'aluminium sous forme de corps moulés préparés au moyen d'un liant.

4.  Procédé pour la fabrication des poudres d'oxydes métalliques mixtes à base d'oxyde de chrome (III) et d'oxyde de titane (IV) ou d'oxyde de chrome (III) et d'oxyde de vanadium (V) ou d'oxyde de titane (IV) et d'oxyde de vanadium (V), de mélanges de ceux-ci, ayant une surface spécifique BET de 5 à 50 m2/g et des diamètres moyens de particules allant de 25 à 350 nm, par pyrolyse au laser en continu de mélanges des composés métalliques vaporisés, à savoir de chlorure de chromyle et de tétrachlorure de titane, de chlorure de chromyle et de chlorure de vanadyle ou de chlorure de titane et de chlorure de vanadyle, respectivement, en présence d'hydrogène, d'azote, d'hexafluorure de soufre, d'oxygène, d'un mélange de l'un des gaz précités avec un gaz rare, ou d'un gaz rare, sous une pression de 10 à 1000 mbars.

5.  Utilisation de poudres d'oyxdes métalliques mixtes ou de mélanges de celles-ci selon la revendication 4, pour la déshydrogénation catalytique d'hydrocarbures ayant de 2 à 6 atomes de carbone ou de mélanges de ceux-ci, à une température de 300 à 700°C et sous une pression de 0,1 à 20 bars, en présence d'hydrogène, de vapeur d'eau, d'oxygène ou de mélanges de ceux-ci.

17

EP 0 371 152 B1

**6.** Utilisation selon la revendication 5, caractérisée en ce que ladite poudre d'oxydes métalliques mixtes ou lesdits mélanges se trouvent en présence de jusqu'à 90 % en poids de poudre d'hydroxyde d'aluminium sous forme de corps moulés préparés du moyen d'un liant.

**Revendications pour l'Etat contractant suivant : GR**

**1.** Poudre d'oxyde métallique à base de poudre d'oxyde de chrome (III) ou d'oxyde de titane (IV) ou d'oxyde de vanadium (V) ayant une surface spécifique BET de 5 à 50 M2/g et des diamètres moyens de particules allant de 25 à 350 mm, préparée à partir de chlorure de chromyle, tétrachlorure de titane ou chlorure de vanadyle respectivement, vaporisés, en présence d'hydrogène, d'azote, déhexafluorure de soufre, d'oxygène, d'un mélange de l'un des gaz précités avec un gaz rare, ou d'un gaz rare, par pyrolyse au laser en continu, sous une pression de 10 à 1000 mbars.

**2.** Utilisation d'une poudre d'oxyde métallique ou d'un mélange de poudres d'oxydes métalliques selon la revendication 1, pour la déshydrogénation catalytique d'hydrocarbures ayant de 2 à 6 atomes de carbone ou de mélanges de ceux-ci, à une température de 300 à 700°C et sous une pression de 0,1 à 20 bars éventuellement en présence d'hydrogène, de vapeur d'eau, d'oxygène ou de mélanges de ceux-ci.

**3.** Utilisation selon la revendication 2, caractérisée en ce que ladite poudre d'oxyde métallique ou ledit mélange de poudres d'oxydes métalliques se trouvent en présance de jusqu'à 90 % en poids de poudre d'hydroxyde d'aluminium sous forme de corps moulés préparés au moyen d'un liant.

**4.** Poudre d'oxydes métalliques mixtes à base d'oxyde de chrome (III) et d'oxyde de titane (IV) ou d'oxyde de chrome (III) et d'oxyde de vanadium (V) ou d'oxyde de titane (IV) et d'oxyde de vanadium (V), de mélanges de ceux-ci, ayant une surface spécifique BET de 5 à 50 m2/g et des diamètres moyens de particules allant de 25 à 350 nm, préparée à partir de mélanges des composés métalliques vaporisés, à savoir de chlorure de chromyle et de tétrachlorure de titane, de chlorure de chromyle et de chlorure de vanadyle ou de chlorure de titane et de chlorure de vanadyle, respectivement, en présence d'hydrogène, d'azote, d'hexafluorure de soufre, d'oxygène, d'un mélange de l'un des gaz précités avec un gaz rare, ou d'un gaz rare, par pyrolyse au laser en continu sous une pression de 10 à 1000 mbars.

**5.** Utilisation de poudres d'oyxdes métalliques mixtes ou de mélanges de celles-ci selon la revendication 4, pour la déshydrogénation catalytique d'hydrocarbures ayant de 2 à 6 atomes de carbone ou de mélanges de ceux-ci, à une température de 300 à 700°C et sous une pression de 0,1 à 20 bars, en présence d'hydrogène, de vapeur d'eau, d'oxygène ou de mélanges de ceux-ci.

**6.** Utilisation selon la revendication 5, caractérisée en ce que ladite poudre d'oxydes métalliques mixtes ou lesdits mélanges se trouvent en présence de jusqu'à 90 % en poids de poudre d'hydroxyde d'aluminium sous forme de corps moulés préparés au moyen d'un liant.

18

FIG. 1

FIG. 2

————————  TiO$_2$/Cr$_2$O$_3$ -Gemisch gem. Erfindung

—·—·—·—·  kommerzielles TiO$_2$

— — — — —        ''        Cr$_2$O$_3$

1200          1000          800          600          400          cm$^{-1}$

FIG. 3

FIG. 4